Europäisches Patentamt

European Patent Office

Office européen des brevets

(11) Publication number: **0 286 739**
**A1**

(12) # EUROPEAN PATENT APPLICATION

(21) Application number: 87303237.9

(51) Int. Cl.4: **H02H 9/04**

(22) Date of filing: **14.04.87**

(43) Date of publication of application:
**19.10.88 Bulletin 88/42**

(84) Designated Contracting States:
**AT BE CH DE ES FR GB GR IT LI LU NL SE**

(71) Applicant: **Semitron Cricklade Limited**
**Chelworth Industrial Estate**
**Cricklade Wiltshire(GB)**

(72) Inventor: **Howard, Christopher George**
**Priory Cottage,**
**Wootton Bassett, Gloucs.,(GB)**
Inventor: **Wood, Michael John**
**Court Garden House, 3, The Street,**
**Uley Dursley, Gloucs.,(GB)**

(74) Representative: **Mehl, Ernst, Dipl.-Ing.**
**Postfach 22 13 17**
**D-8000 München 22(DE)**

(54) **Transit suppression system.**

(57) A transient suppression system comprising at least one transient suppressor for clamping short duration pulse voltages and at least one thermally activated fuse for controlling the electrical power input to said at least one transient suppressor should be improved. At least one transient suppressor is placed in intimate thermal contact with at least one of the thermally activated fuses.

# FIG 3

## Transient Suppression System

This invention relates to a transient suppression system comprising at least one transient suppressor for clamping short duration pulse voltages and a further device comprising at least one temperature sensitive fuse for limiting the electrical power input to said at least one transient suppressor thereby preventing longer duration fault conditions damaging said transient suppressor.

A transient absorption device (transient suppressor) presents a relatively high impedance over a given range of applied voltage and a low impedance in response to transient voltage excursions from the given range, the device having particular application as a protection device in an electrical circuit, for protecting the circuit by selectively conducting transient surges in current flowing in the circuit. Transient absoption devices may be gas discharge tubes, semiconductor devices or varistors.

It is known that a PN junction in a semiconductor body can be used to protect an electrical circuit from transient voltage surges. The PN junction is connected across a voltage supply to the circuit such as to be reverse biased. The breakdown voltage of the reverse biased junction is selected to be somewhat greater than the voltage normally developed by the supply. Thus in normal use, the junction does not conduct substantially but in the event of a transient voltage surge which results in the supply voltage exceeding the breakdown voltage, the reverse biased junction breaks down and conducts the current surge associated with the voltage surge, so as to protect the circuit from the surge. The breakdown voltage is typically in the range 2 -1000 V the value thereof being selected for the junction concerned by control of the doping levels utilised in manufacture of the junction. For higher voltages in the aforementioned range of breakdown voltages the breakdown occurs by virtue of the Avalanche effect whereas at lower voltages the Zener effect may predominate.

Typically the current flowing in the reverse biased junction prior to breakdown is of the order of 1 - 10 $\mu$A whereas after breakdown, heavy current surges with peak currents of 25 amps or more may flow. Transient suppression semiconductor devices include 2 layer devices (diodes), 3 layer devices (foldback diodes), 4 layer devices (thyristors) and 5 layer devices (triacs).

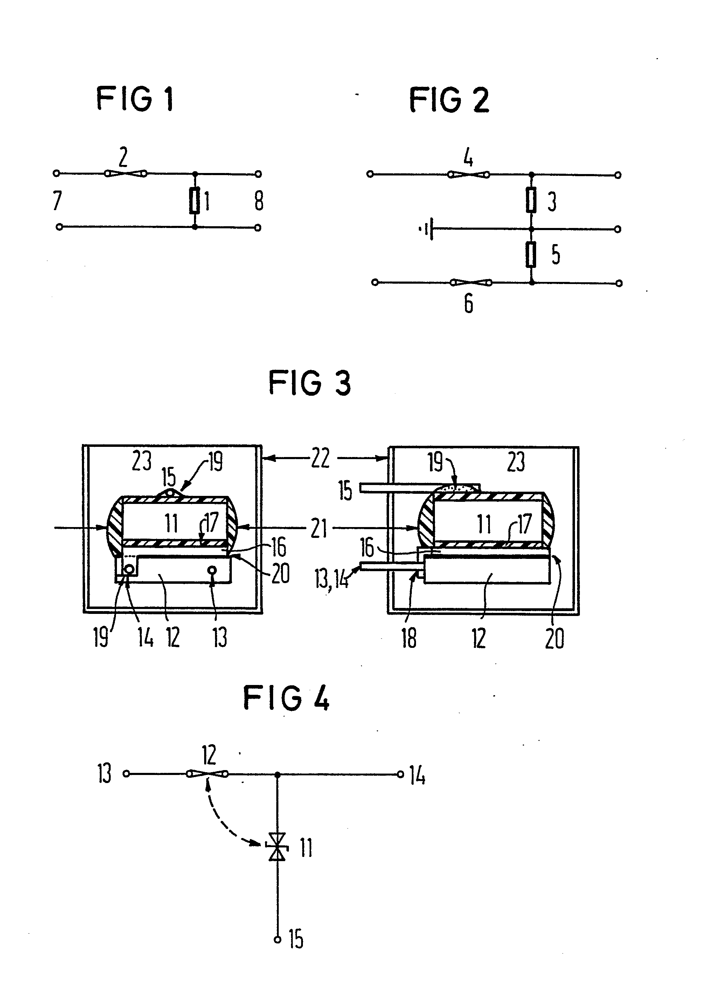

Transient suppressors are frequently used in connection with fuses in surge protection circuits such as that shown in Figure 1. The transient suppressor 1 is used to clamp short duration pulse voltages with time constants in the range 10 nsec to 10 msec. These voltages can reach 5000 V and the associated currents 5000 amps. The current activated fuse 2 is used to prevent longer duration fault conditions damaging the transient protector 1 and thereafter subsequent electronic devices in the system.

The current activated fuse 2 controls the electrical power input to the transient suppressor 1. The transient suppression system of Figure 1 has the input 7 and the output 8.

Figure 2 shows two such circuits as shown in Figure 1 in a configuration often used in telecommunications applications. The transient suppression system of Figure 2 comprises two transient suppressors 3, 5 and two current activated fuses 4, 6, the two transient suppressors 3, 5 having one common terminal which is set on a reference potential.

A fuse suitable for this application must meet two requirements. It must protect the transient absorption device from excessive thermal dissipation during long duration surges and it must conduct very high currents during short duration surges which are within the capabilities of the transient absorption devices. It has proved impossible to find a fuse which will remain intact during surges of 1000 amps (8 $\mu$sec rise time, 20 $\mu$sec exponential decay), yet will go short circuit at low enough continuous currents to protect semiconductor transient suppressors from degradation due to excessive long term dissipation.

The present invention provides an improved transient suppression system in which the aforementioned disadvantages are overcome. At least one transient suppressor is placed in intimate thermal contact with at least one thermally activated fuse.

The transient suppressor device is placed in intimate thermal contact with the thermally activated fuse. Power dissipated in the transient suppressor causes heating of the thermally activated fuse. When the operating temperature of the fuse is exceeded, it goes open circuit. The transient absorption device is never therefore permitted to overheat, so its parameters are not degraded. Subsequent circuitry is always protected and will operate until the fuse goes open circuit.

Whilst, as will hereinafter be discussed, variation of one or more of the manufacturing parameters of the transient suppression system according to the invention enables systems to be manufactured consistently and reliably with breakdown voltages within a relatively wide range and up to relatively high values of the order of 150 to 200 V for example. For applications in the higher voltage areas the invention further proposes, rather than the provision of a single transient suppressor, to couple together in series two or more transient suppressors each of a lower breakdown voltage rating. The resultant composite system has a breakdown voltage substantially corresponding to the sum of the breakdown voltages of the individual transient suppressors of the composite multi-device structure.

In order that the invention may be more fully understood, embodiments thereof and their operating characteristics will one be described by way of illustrative example and by way of contrast with prior art systems, reference being had to the accompanying drawings wherein:

Figures 1 and 2 show typical transient suppression systems;

Figure 3 shows a transient suppression system according to the invention.

Figure 3 shows one application of the invention. A transient suppressor device 11 type L5C 150 CD manufactured by Semitron Cricklade Ltd., Cricklade Swindon, Wiltshire, G.B., SN 6 6HQ, is soldered to a thermally activated fuse 12 supplied by H. A. Wainwright and Co. Ltd., G.B. The transient suppressor device L5C 150 CD ist of a type known as a foldback device (U.K. patent No. 2 116 774).

Such a foldback device comprises a body of semiconductor material including a region of a first conductivity type disposed between regions of opposite conductivity type so as to define first and second spaced apart semiconductor rectifying junctions, first and second electrodes so arranged that when a potential difference is applied thereto one of said junctions is forward biased and the other of the junctions is reverse biased, the junctions being disposed to interact in such a manner that upon breakdown of the reverse biased junction from a relatively low conductivity state to a relatively high conductivity state and with an increase in the magnitude of the current flowing through the device, the magnitude of the potential difference developed across the electrodes decreases from that which causes said breakdown but does not decrease to a value less than a given non-zero value.

For an applied voltage V up to a given breakdown voltage $V_b$, the current flowing through the foldback device is the foldback device leakage current which is very small, for example 5 uA, and this has a significant effect on the operation of the circuit being protected. In this situation, one PN junction is forward biased, and the other PN junction is reverse biased but not such as to exceed its breakdown voltage.

When a voltage transient occurs in the supply voltage V, such as to apply to the device a voltage exceeding $V_b$, the reverse biased junction breaks down and conducts by means of the Avalanche effect. Consequently, the foldback device then provides a conductive path for surge currents produced by the voltage transient, and the surge currents thus by-pass the circuit to be protected to prevent it being damaged. As the surge current increases, the voltage developed across the device rapidly reduces from the foldback device breakdown voltage $V_b$ to a predetermined non-zero value $V_m$ and as the current increases further, the voltage remains at the value $V_m$ at least over a considerable range of surge current.

The voltage $V_m$ may be selected by means of the doping process used to make the device and principally by control of the proximity to one another of the two PN junctions by control of the dopant diffusion depths and will be selected in dependance upon the characteristics of the circuit to be protected to be in excess of the minimum safe supply voltage for the circuit being protected.

Such a foldback device 11 is designed to breakdown at approximately 160 V. The voltage across the device 11 is then reduced to approximately 100 V due to the "foldback" action of the device 11.

The thermally activated fuse 12 is designed to change from a low resistance state ( 1 ohm) to an open circuit at 80°C (50°-200°C possible). It will also go open circuit when the continuous current exceeds 3 amps.

The assembly has three terminals 13, 14, 15. Two of these 13, 14 can be the existing terminals of the thermally active fuse 12. One electrode of the transient suppression device 11 ist soldered to a conductor 16 with solder 17. This conductor 16 is soldered to terminal 14 with solder 18. The other electrode of the transient suppression device 11 is soldered to electrode 15 with solder 19. The conductor 16 is attached to the thermally activated fuse by thermally conductive adhesive 20. The transient suppression device 11 ist coated with silicone rubber 21 to prevent flash-over. The complete assembly is encapsulated in a plastic box 22 with epoxy resin 23.

The resultant composite device has the circuit elements shown in Figure 4. One such device is required for the circuit shown in Figure 1 and two such devices are required for the circuit shown in Figure 2.

The terminals 13, 14 of the device of Figure 3, 4 are supplied with the electrical input and the terminals 14, 15 yield the corresponding electrical output.

An assembly of the type depicted in Figure 3 has shown excellent powers of circuit protection. The fuse 12 protects against continuous excessive current. The transient suppressor 11 protects against short time constant surges. The fuse 12 also reacts to excessive temperature due to power dissipation in the transient suppressor device 11. The combined unit therefore acts as a protector in intermediate fault conditions. Such behaviour was observed when subjecting the device to a 200 mA/240 V AC fault current for a duration of 5 minutes. If the fuse 12 and transient suppressor 11 were not placed in thermal contact, the transient suppressor 11 would be degraded by this condition. The new innovative device prevented excessive temperature rise in the transient suppressor device 11, thus avoiding any degradation of its characteristics. It continued to act as a protector until the fuse rupture was complete.

The transient suppression system does not only apply to Zener diode based Semiconductor devices, but can apply to other transient suppressor devices such as gas discharge tubes and thyristor based protectors.

## Claims

1. Transient suppression system comprising at least one transient suppressor for clamping short duration pulse voltages and a further device comprising at least one temperature sensitive fuse for limiting the electrical power input to said at least one transient suppressor thereby preventing longer duration fault conditions damaging said transient suppressor characterized in that
at least one transient suppressor is placed in intimate thermal contact with at least one of the at least one thermally activated fuses.

2. Transient suppression system according to claim 1, characterized in that
at least one transient suppressor is soldered to at least one of the at least one thermally activated fuses.

3. Transient suppression system according to claim 1 or 2, characterized in that
at least one thermally activated fuse is designed to change from a low resistance state to an open circuit.

4. Transient suppression system according to one of the claims 1 to 3,
characterized in that
at least one transient suppressor is designed to breakdown at approximately 160 V.

5. Transient suppression system according to claim 4, characterized in that
after the breakdown of the at least one transient suppressor, the voltage across the at least one transient suppressor is reduced to approximately 100 V due to a foldback action of the transient suppressor.

6. Transient suppression system according to one of the claims 1 to 5,
characterized by
three terminals soldered to it.

7. Transient suppression system according to one of the claims 1 to 6,
characterized by
a coating of silicone rubber.

8. Transient suppression system according to one of the claims 1 to 7,
characterized by
at least one Zener diode based Semiconductor device as a transient suppressor.

9. Transient suppression system according to one of the claim 1 to 8,
characterized by
at least one gas discharge tube as a transient suppressor.

10. Transient suppression system according to one of the claims 1 to 9,
characterized by
at least one thyristor based protector as a transient suppressor.

**FIG 1**

**FIG 2**

**FIG 3**

**FIG 4**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 405 671  (SIEMENS)<br><br>* complete document * | 1-3,8,9 | H 02 H    9/04 |
| A | | 4,5 | |
| | --- | | |
| A | EP-A-0 017 337  (RELIABLE ELECTRIC CO.)<br>*  page 7, lines 4-17; figures 1, 5 * | 1 | |
| | --- | | |
| A | US-A-4 068 281  (J.D. HARNDEN, JR.)<br>* figures 1-7 * | 1 | |
| | ----- | | |

|  | TECHNICAL FIELDS SEARCHED (Int. Cl.4) |
|---|---|
| | H 02 H    9/04<br>H 02 H    9/06 |

The present search report has been drawn up for all claims

| Place of search | Date of completion of the search | Examiner |
|---|---|---|
| BERLIN | 05-11-1987 | LEMMERICH J |